# EUROPEAN PATENT SPECIFICATION

(11) **EP 1 111 998 B1**
(45) Date of publication and mention of the grant of the patent: **08.05.2002**
(21) Application number: 99934675.2
(22) Date of filing: 13.07.1999
(51) Int. Cl.: A21D 10/04, A21D 13/08, A21D 2/36, A21D 2/18, A23G 3/00, A23G 9/02

(54) **SUGAR WAFERS**
ZUCKERWAFFELN
BARRES DE CEREALES SUCREES

(30) Priority: 08.09.1998 GB 9819564
(43) Date of publication of application: 04.07.2001
(73) Proprietor: SOCIETE DES PRODUITS NESTLE S.A., 1800 Vevey (CH)
(72) Inventor: CONTI, Claudia, York Y031 7ES (GB); MOPPETT, Garry, Dean, Huntington, York Y032 9SH (GB)
(74) Representative: Pate, Frederick George
(86) International application number: PCT/EP99/04905
(87) International publication number: WO 00/13512

(56) References cited:
- WO-A-99/02042
- DE-C- 19 648 506
- PATENT ABSTRACTS OF JAPAN vol. 1999, no. 08, 30 June 1999 (1999-06-30) -& JP 11 075677 A (EZAKI GLICO CO LTD), 23 March 1999 (1999-03-23)
- C.D. BARNETT: "Colombina - South American plant utilizes native raw materials" CANDY AND SNACK INDUSTRY, vol. 138, no. 2, 1973, pages 30-32, XP000853527
- B. MANUHARKUMAR ET AL.: "Mischmehle mit indischem Mais für die Herstellung von Mürbkeks und Flachwaffeln" GETREIDE MEHL UND BROT., vol. 32, no. 5, 1978, pages 121-124, XP000853547 BOCHUM., DE ISSN: 0367-4177
- DATABASE WPI Section Ch, Week 199624 Derwent Publications Ltd., London, GB; Class D11, AN 1996-232976 XP002122523 & HU 70 252 A (INTERKOLLOID ELELMISZERIPARI ADALEKANYAG), 28 September 1995 (1995-09-28)

## Description

### FIELD OF INVENTION

The present invention relates to wafers, more particularly to sugar wafers and processes of preparing them.

### BACKGROUND OF THE INVENTION

Wafers are normally made from batter recipes using from about 20% to 60% by weight of flour, water and sucrose (which may be brown or white) together with smaller quantities of one or more ingredients typically used in a sugar wafer such as fat, milk, cream, milk powder, whole egg, egg powder, soya flour, salt, lecithin, colourant, cocoa powder, flavours, emulsifiers, vanilla crystals and a raising agent. The flour is usually wheat flour but it may be another flour such as rice flour or a flour admixed with a starch. Wafers usually have a low fat content, normally from 1-2% but in some cases up to 10% and the main function of the fat is as an antisticking/releasing agent. Sugar wafers differ from standard wafers in containing a higher sugar content, e.g. from about 40% to 70% compared with less than 5% for standard wafers.

Wafers may be distinguished from biscuits/cookies in that wafers are the result of baking a batter whereas biscuits/cookies are baked out of a dough. Batter normally has a water content of more than 100 parts per 100 parts of flour and is a liquid suspension that will flow through a pipe whereas biscuit dough is rather stiff to permit rolling and flattening and has a water content of less than 50 parts per 100 parts of flour.

A major problem with standard sugar wafers is that they tend to lose their crispiness with time by absorbing moisture which softens them and therefore lose their characteristic desirable textural properties. After baking the batter, there is only a limited amount of time, usually up to about 40 seconds, during which the wafers stay sufficiently flexible to allow further processing, such as modifying the shape or filling a tubular shaped wafer.

DATABASE WPI Section Ch, Week 199624 Derwent Publications Ltd., London GB; Class D11, AN 1996-232976 XP002122523 & HU 70 252 A (INTERKOLLOID ELELMISZERIPARI ADALEKANYAG), 28 September 1995 (1995-09-28) discloses baked wafer biscuits containing no sugar and containing inter alia dextrose, powder or liquid starch syrup and corn flour.

DE 196 48 506 C discloses baked wafer biscuits containing inter alia wheat flour, sugar and invert sugar syrup.

B.MANUHARKUMAR ET AL.: "Mischmehle mit indischen Mais für die Herstellung von Mürbkeks und Flachwaffeln" GETREIDE MEHL UND BROT., vol 32, no.5, 1978, pages 121-124, XP000853547 BOCHUM., DE ISSN: 0367-4177 discloses flat wafers containing 25% and 50% added maize meal, the particle size being from 100-150 microns.

C.D.BARNETT: "Colombina - South American plant utilizes raw materials" CANDY AND SNACK INDUSTRY, vol 38, no. 2, 1973, pages 30-32, XP000853527 discloses the use of corn syrup in sugar wafer sandwich.

### SUMMARY OF THE INVENTION

We have found that by replacing part of the wheat flour in a wafer batter by cereal grits and replacing all or part of the sucrose with a reducing sugar, we can obtain a sugar wafer that is sufficiently flexible over a longer period of time when compared with standard sugar wafers to allow further processing while retaining its characteristic desirable crispiness when cooled. In addition, we can obtain a sugar wafer which is harder, is more crunchy and has a more coarse and gritty texture than a conventional sugar wafer.

According to the present invention, there is provided a sugar wafer batter in which part of the wheat flour is replaced by cereal grits and all or part of the sucrose is replaced by a reducing sugar.

### DETAILED DESCRIPTION OF THE INVENTION

The cereal grits may be, for instance, corn grits, maize grits, wheat grits, oat grits or rice grits, etc. or any combination of two or more thereof.

The amount of water in the sugar wafer batter of the present invention is usually from 100 to 160 parts and more preferably from 120 to 140 parts by weight per 100 parts by weight of the flour or, where part of the wheat flour is replaced by cereal grits, per 100 parts of the total weight of the wheat flour and cereal grits.

The amount of sucrose or, where all or part of the sucrose is replaced by a reducing sugar, the total amount of sucrose and reducing sugar in the sugar wafer batter of the present invention is usually from 50 to 100 parts and more preferably from 60 to 85 parts by weight per 100 parts by weight of the flour or, where part of the wheat flour is replaced by cereal grits, per 100 parts of the total weight of the wheat flour and cereal grits.

In a first embodiment of this invention, up to 90% by weight of the wheat flour in a standard sugar wafer batter may be replaced by the cereal grits but preferably from 20% to 60% and more preferably from 25% to 45% by weight of the wheat flour may be replaced by the cereal grits.

Corn grits are also known as corn meal which is a ground product obtained by dry milling the endosperm of corn. The particle sizes typically vary from about 100 microns to about lmm, and more usually from 150 to 500 microns.

Alternatively, in a second embodiment of this invention, all or part of the sucrose in a standard sugar wafer batter may be replaced by a reducing sugar. For example, from 15 to 80% by weight of the sucrose may be replaced by the reducing sugar but preferably from 20% to 50% and more preferably from 25% to 40% by weight of the sucrose may be replaced by the reducing sugar. The reducing sugar may be, for example, fructose, glucose, glucose syrup, dextrose, corn syrup, invert sugar, fruit juices containing reducing sugars such as grape juice, or honey.

The sugar wafers may be prepared by baking a sugar wafer batter according to the invention as hereinbefore described. The sugar wafer batter may be baked by conventional methods, for example, using a baking oven, a baking machine, a moulding cone, baking plates, or on the surface of a sugar wafer drum well known to those skilled in the art to give the sugar wafer. The baking temperature may be from 140°C to 180°C, preferably from 150°C to 170°C and more usually from 160°C to 165°C. The baking may be carried out over a period of from 0.5 to 2 minutes and preferably from 0.75 to 1.5 minutes.

Accordingly, the present invention also provides a sugar wafer in which part of the flour is replaced by cereal grits and all or part of the sucrose is replaced by a reducing sugar.

The amount of water in the sugar wafer according to the present invention is usually from about 0.5% to 6% and preferably from 0.75 to 3% by weight based on the total weight of the sugar wafer.

The remaining ingredients of the sugar wafer according to the present invention, based on the weight of the wheat flour or, where part of the wheat flour is replaced by cereal grits, per 100 parts of the total weight of the wheat flour and cereal grits, remain substantially the same.

The total amount of water, fat, wheat flour and sucrose together with their replacements in the sugar wafer usually accounts for at least 95%, e.g. from 96% to 98% by weight of the sugar wafer. The remaining ingredients include one or more ingredients typically used in a sugar wafer such as milk, cream, milk powder, whole egg, egg powder, soya flour, salt, lecithin, a colourant such as caramel colour, cocoa powder, flavours, emulsifiers, vanilla crystals and a raising agent.

The sugar wafers according to the present invention may have a variety of shapes and sizes, e.g. they may be flat sheets, cup or cone-shaped or they may be tubular. If desired, the sugar wafers may be further processed after baking ,e.g. they may be crimped, pressed or shaped in a mould. They may be used in a variety of confectionery products together with confectionery materials such as ice creams or chocolates or other fatty materials such as fat-based cream. The tubular wafers may be filled with confectionery materials preferably of low water activity so that a minimum of moisture migration occurs, e.g. savoury filling, ice cream or fat-based creams containing yoghurt The sugar wafers of the present invention are sufficiently flexible under ambient conditions after baking for more than 40 seconds, usually for more than 50 seconds, e.g. up to 70 seconds or more to enable further processing.

The present invention further provides a confectionery product comprising a sugar wafer according to the present invention together with a confectionery material.

The sugar wafer may be used in direct contact with confectionery material or, if desired, a moisture barrier may be used between the surface of the sugar wafer and the other confectionery material, e.g the moisture barrier may conveniently be coated on the surface of the sugar wafer adjacent the confectionery material. Any conventional food-acceptable moisture barrier may be used, but preferably a fat-based moisture barrier such as chocolate or chocolate substitute may be used.

When the confectionery product comprising the sugar wafer is used in direct contact with a confectionery material, the confectionery material preferably has a low water activity, e.g. a water activity below 0.5 and preferably below 0.3.

The confectionery product comprising the sugar wafer may, if desired, be enrobed with another suitable confectionery material, for example, with plain, white or milk chocolate or with chocolate substitute.

The confectionery product comprising the sugar wafer may be refrigerated or frozen.

### EXAMPLES

The following Examples further illustrate the present invention

### Example 1

A sugar wafer batter is prepared having the following ingredients:

| | |
|---|---|
| Water | 41.8% |
| Wheat flour | 19.4% |
| Corn grits | 12.9% |
| Brown sugar | 15.3% |
| Honey | 7.9% |
| *Other ingredients | 2.7% |

| | |
|---|---|
| * includes milk powder, egg powder, soya flour, salt, lecithin and vanilla crystals. | |

The above batter is fed as a suspension onto the surface of a drum of a wafer baking machine and baked at 162°C for 1 minute to form a wafer sheet having a water content of below 5% by weight The wafer sheet is then passed to a spindle and rolled to form a tube. The tube is filled with a fat-based cream containing yoghurt, closed at each end and shaped mechanically as desired. The wafer is sufficiently flexible over a period of 60 seconds after baking which allows this further processing. The tube is finally enrobed with a layer of plain chocolate.

The product is then refrigerated.

On eating, a panel of seven expert tasters found that the wafer was harder, more crunchy and had a more coarse and gritty texture than a conventional sugar wafer. These findings were supported by mechanical and sensory analysis.

Immediately after baking, the sugar wafer was found to remain flexible for over 100 seconds which is significantly longer than a standard wafer. In addition the cooling rate was reduced compared with a standard wafer, and the temperature at which the wafer became brittle was also reduced to 77°C compared with 93°C for a standard wafer.

## Claims

1. A sugar wafer batter in which part of the wheat flour is replaced by cereal grits having a particle size from 100 microns to 1 mm, preferably from 150 microns to 500 microns and all or part of the sucrose is replaced by a reducing sugar.

2. A sugar wafer batter according to claim 1 wherein cereal grits are corn grits, maize grits, wheat grits, oat grits or rice grits, or any combination of two or more thereof.

3. A sugar wafer batter according to claim 1 in which the amount of water in the sugar wafer batter of the present invention is from 100 to 160 parts by weight per 100 parts by weight of the flour or, where part of the wheat flour is replaced by cereal, per 100 parts of the total weight of the wheat flour and cereal grits.

4. A sugar wafer batter according to claim 1 in which the amount of sucrose or, where part of the sucrose is replaced by a reducing sugar, the total amount of sucrose and reducing sugar in the sugar wafer batter is from 50 to 100 parts by weight per 100 parts by weight of the flour or, where part of the wheat flour is replaced by cereal grits, per 100 parts of the total weight of the wheat flour and cereal grits.

5. A sugar wafer batter according to claim 1 in which up to 90% by weight of the wheat flour in a standard sugar wafer batter is replaced by the cereal grits.

6. A sugar wafer batter according to claim 1 in which from 15% to 80% by weight of the sucrose is replaced by the reducing sugar.

7. A sugar wafer batter according to claim 1 in which the reducing sugar is fructose, glucose, glucose syrup, dextrose, corn syrup, invert sugar, fruit juices containing reducing sugars such as grape juice, or honey.

8. A process for preparing a sugar wafer which comprises baking a sugar wafer batter according to claim 1.

9. A sugar wafer in which part of the wheat flour is replaced by cereal grits having a particle size from 100 microns to 1 mm, preferably from 150 microns to 500 microns and all or part of the sucrose is replaced by a reducing sugar.

10. A sugar wafer according to claim 9 in which the amount of water in the sugar wafer is from about 0.5% to 6% by weight based on the total weight of the sugar wafer.

11. A sugar wafer according to claim 9 in which the total amount of water, fat, wheat flour and sucrose together with their replacements accounts for at least 95% by weight of the sugar wafer and the remaining ingredients include one or more of milk, cream, milk powder, whole egg, egg powder, soya flour, salt, lecithin, vanilla crystals and a raising agent.

12. A confectionery product comprising a sugar wafer according to claim 9 together with a confectionery material.

13. A confectionery product according to claim 12 wherein the sugar wafer is used in direct contact with confectionery material.

14. A confectionery product according to claim 12 wherein a moisture barrier is used between the surface of the sugar wafer and the other confectionery material.

15. A confectionery product according to claim 14 wherein the moisture barrier is coated on the surface of the sugar wafer adjacent the confectionery material.

16. A confectionery product according to claim 13 wherein when the sugar wafer is used in direct contact with a confectionery material, the confectionery material has a water activity below 0.5.

17. A confectionery product according to claim 12 wherein the confectionery product comprising the sugar wafer is enrobed with plain, white or milk chocolate or with chocolate substitute.

## Patentansprüche

1. Zuckerwaffel-Eierteig, bei dem ein Teil des Weizenmehls durch Getreide-Gries mit einer Teilchengröße von 100 µm bis 1 mm, vorzugsweise von 100 µm bis 500 µm ersetzt ist, und bei dem ein Teil der Saccharose durch einen reduzierenden Zuckers ersetzt ist.

2. Zuckerwaffel-Eierteig nach Anspruch 1, bei dem der Getreide-Gries Korn-Gries, Mais-Gries, Weizen-Gries, Hafer-Gries oder Reis-Gries oder jede Kombination von zwei oder mehreren davon ist.

3. Zuckerwaffel-Eierteig nach Anspruch 1, bei dem die Menge an Wasser in dem erfindungsgemäßen Zuckerwaffel-Eierteig von 100 bis 160 Gewichtsteile pro 100 Gewichtsteile Mehl ist, oder wenn ein Teil des Weizenmehls durch Getreide ersetzt ist, pro 100 Teile des Gesamtgewichts von Weizenmehl und Getreide-Gries.

4. Zuckerwaffel-Eierteig nach Anspruch 1, bei dem die Menge an Saccharose, oder wenn ein Teil der Saccharose durch einen reduzierenden Zucker ersetzt ist, die Gesamtmenge an Saccharose und reduzierendem Zucker, in dem Zuckerwaffel-Eierteig von 50 bis 100 Gewichtsteile pro 100 Gewichtsteile des Mehls beträgt, oder, wenn das Weizenmehl durch Getreide-Gries ersetzt ist, pro 100 Teile des Gesamtgewichts an Weizenmehl und Getreide-Gries.

5. Zuckerwaffel-Eierteig nach Anspruch 1, bei dem bis zu 90 Gewichtsprozent des Weizenmehls in einem Standard-Zuckerwaffel-Eierteig durch Getreide-Gries ersetzt sind.

6. Zuckerwaffel-Eierteig nach Anspruch 1, bei dem von 15 bis 80 Gewichtsprozent der Saccharose durch den reduzierenden Zucker ersetzt sind.

7. Zuckerwaffel-Eierteig nach Anspruch 1, bei dem der reduzierende Zucker Fructose, Glucose, Glucosesirup, Dextrose, Stärkezuckersirup, Invertzucker, Fruchtsäfte mit reduzierendem Zucker, wie Traubensaft, oder Honig ist.

8. Verfahren zur Herstellung einer Zuckerwaffel, welches Backen eines Zuckerwaffel-Eierteigs nach Anspruch 1 umfasst.

9. Zuckerwaffel, bei der ein Teil des Weizenmehls durch Getreide-Gries mit einer Teilchengröße von 100 µm bis 1 mm, vorzugsweise von 100 µm bis 500 µm ersetzt ist, und bei dem ein Teil der Saccharose durch einen reduzierenden Zucker ersetzt ist.

10. Zuckerwaffel nach Anspruch 9, bei der die Menge an Wasser in der Zuckerwaffel von 0,5 bis 6 Gewichtsprozent, bezogen auf das Gesamtgewicht der Zuckerwaffel, ist.

11. Zuckerwaffel nach Anspruch 9, bei der die Gesamtmenge an Wasser, Fett, Weizenmehl und Saccharose zusammen mit deren Ersatzmengen mindestens 95 Gewichtsprozent der Zuckerwaffel ausmachen und bei der die verbleibenden Inhaltsstoffe ein oder mehrere von Milch, Sahne, Milchpulver, Gesamtei, Eipulver, Sojamehl, Lecithin, Vanillekristalle und Treibmittel umfassen.

12. Süßwarenprodukt umfassend eine Zuckerwaffel nach Anspruch 9 zusammen mit einem Süßwarenmaterial.

13. Süßwarenprodukt nach Anspruch 12, bei dem der die Zuckerwaffel in direktem Kontakt mit einem Süßwarenmaterial verwendet wird.

14. Süßwarenprodukt nach Anspruch 12, bei dem zwischen der Oberfläche der Zuckerwaffel und dem anderen Süßwarenmaterial eine Feuchtigkeitssperre eingesetzt wird.

15. Süßwarenprodukt nach Anspruch 14, bei dem die Feuchtigkeitssperre auf der Seite der Zuckerwaffel neben dem Süßwarenmaterial beschichtet ist.

16. Süßwarenprodukt nach Anspruch 13, bei dem die Zuckerwaffel in direktem Kontakt mit einem Süßwarenmaterial eingesetzt wird, wobei das Süßwarenmaterial eine Wasseraktivität von unter 0,5 aufweist.

17. Süßwarenprodukt nach Anspruch 12, wobei das Süßwarenprodukt mit der Zuckerwaffel mit normaler, weisser oder Milch-Schokolade oder mit einem Schokoladenersatz umgeben ist.

## Revendications

1. Pâte pâtissière pour gaufrettes au sucre, dans laquelle une partie de la farine de blé est remplacée par des gruaux de céréales ayant des dimensions de particules de 100 micromètres à 1 mm, de préférence de 150 micromètres à 500 micromètres, et la totalité ou une partie du saccharose est remplacée par un sucre réducteur.

2. Pâte pâtissière pour gaufrettes au sucre suivant la revendication 1, dans laquelle les gruaux de céréales sont des gruaux de froment, des gruaux de maïs, des gruaux de blé, des gruaux d'avoine ou des gruaux de riz ou n'importe quelle association de deux ou plus de deux d'entre eux.

3. Pâte pâtissière pour gaufrettes au sucre suivant la revendication 1, dans laquelle la quantité d'eau dans la pâte pâtissière pour gaufrettes au sucre de la présente invention est comprise dans l'intervalle de 100 à 160 parties en poids pour 100 parties en poids de la farine ou, lorsqu'une partie de la farine de blé est remplacée par des gruaux de céréales, pour 100 parties du poids total de la farine de blé et des gruaux de céréales.

4. Pâte pâtissière pour gaufrettes au sucre suivant la revendication 1, dans laquelle la quantité de saccharose ou, lorsqu'une partie du saccharose est remplacée par un sucre réducteur, la quantité totale de saccharose et de sucre réducteur dans la pâte pâtissière pour gaufrettes au sucre est comprise dans l'intervalle de 50 à 100 parties en poids pour 100 parties en poids de la farine ou, lorsqu'une partie de la farine de blé est remplacée par des gruaux de céréales, pour 100 parties du poids total de la farine de blé et des gruaux de céréales.

5. Pâte pâtissière pour gaufrettes au sucre suivant la revendication 1, dans laquelle une quantité allant jusqu'à 90 % en poids de la farine de blé dans une pâte pâtissière pour gaufrettes au sucre classiques est remplacée par les gruaux de céréales.

6. Pâte pâtissière pour gaufrettes au sucre suivant la revendication 1, dans laquelle une quantité de 15 % à 80 % en poids du saccharose est remplacée par le sucre réducteur.

7. Pâte pâtissière pour gaufrettes au sucre suivant la revendication 1, dans laquelle le sucre réducteur est le fructose, le glucose, le sirop de glucose, le dextrose, le sirop de froment, le sucre inversé, des jus de fruits contenant des sucres réducteurs tels que le jus de raisin ou le miel.

8. Procédé pour la préparation d'une gaufrette au sucre, qui comprend la cuisson au four d'une pâte pâtissière pour gaufrettes au sucre suivant la revendication 1.

9. Gaufrette au sucre dans laquelle une partie de la farine de blé est remplacée par des gruaux de céréales ayant des dimensions de particules de 100 micromètres à 1 mm, de préférence de 150 micromètres à 500 micromètres et la totalité ou une partie du saccharose est remplacée par un sucre réducteur.

10. Gaufrette au sucre suivant la revendication 9, dans laquelle la quantité d'eau dans la gaufrette au sucre est comprise dans l'intervalle d'environ 0,5 % à 6 % en poids sur la base du poids total de la gaufrette au sucre.

11. Gaufrette au sucre suivant la revendication 9, dans laquelle la quantité totale d'eau, de matières grasses, de farine de blé et de saccharose conjointement avec leurs produits de remplacement représente au moins 95 % en poids de la gaufrette au sucre et les ingrédients restants comprennent un ou plusieurs des ingrédients consistant en le lait, la crème, le lait en poudre, les oeufs entiers, la poudre d'oeuf, la farine de soja, le sel, la lécithine, des cristaux de vanille et un agent levant.

12. Produit de confiserie comprenant une gaufrette au sucre suivant la revendication 9, conjointement avec une substance de confiserie.

13. Produit de confiserie suivant la revendication 12, dans lequel la gaufrette au sucre est utilisée au contact direct avec une substance de confiserie.

14. Produit de confiserie suivant la revendication 12, dans lequel une barrière à l'humidité est utilisée entre la surface de la gaufrette au sucre et l'autre substance de confiserie.

15. Produit de confiserie suivant la revendication 14, dans lequel la barrière à l'humidité est appliquée sous forme d'un enrobage sur la surface de la gaufrette au sucre adjacente à la substance de confiserie.

16. Produit de confiserie suivant la revendication 13, dans lequel, lorsque la gaufrette au sucre est utilisée au contact direct avec une substance de confiserie, la substance de confiserie a une activité d'eau inférieure à 0,5.

17. Produit de confiserie suivant la revendication 12, ledit produit de confiserie comprenant la gaufrette au sucre est enrobé avec du chocolat ordinaire, du chocolat blanc ou du chocolat au lait ou avec un succédané de chocolat.
